# EUROPEAN PATENT SPECIFICATION

(11) **EP 4 082 913 B1**
(45) Date of publication and mention of the grant of the patent: **08.05.2024**
(21) Application number: 22166958.3
(22) Date of filing: 06.04.2022
(51) Int. Cl.: B64D 27/24, B64C 25/06, B64D 41/00

(54) **FLIGHT VEHICLE**
FLUGVORRICHTUNG
VÉHICULE VOLANT

(30) Priority: 26.04.2021 JP 2021074374
(43) Date of publication of application: 02.11.2022
(73) Proprietor: TOYOTA JIDOSHA KABUSHIKI KAISHA, Toyota-shi, Aichi-ken, 471-8571 (JP)
(72) Inventor: KANEKO, Tomohiko, Toyota-shi, 471-8571 (JP)
(74) Representative: J A Kemp LLP

(56) References cited:
- WO-A1-2020/045995
- US-A1- 2017 200 961
- US-A1- 2021 009 280

## Description

### FIELD

The present disclosure relates to a flight vehicle.

### BACKGROUND

In an aircraft that flies with an engine using jet fuel as a power source, for example, Patent Literature 1 discloses a method and an apparatus for controlling a fuel flow to an engine, and Patent Literature 2 discloses automatic control systems for aircraft auxiliary power units, and associated methods.

### CITATION LIST

### Patent Literature

Patent Literature 1: JP 2007-511701 A
Patent Literature 2: JP 2008-514485 A
US 2017/200961 A1 , US 2021/009280 A1 and WO 2020/045995 A1 disclose flight vehicles including a fuel cell and a propeller driven by electric power generated by the fuel cell.

### SUMMARY

### Technical Problem

When generation of electricity is stopped by the operation of stopping the generation of electricity by a fuel cell (such as a stop operation of a switch) in flight in a flight vehicle using the fuel cell as a power source for flight, power for generating thrust is lost. Once the generation of electricity by a fuel cell is stopped, it takes more time to restart the generation than that by an engine, and in some cases, it may be impossible to restart the generation due to freezing.

An object of the present disclosure is to provide a flight vehicle that makes it possible to prevent the generation of electricity by a fuel cell from being stopped in flight even when a mistaken operation is conducted.

### Solution to Problem

The present application discloses a flight vehicle including a fuel cell and a propeller, the propeller to be driven by electric power generated by the fuel cell, the flight vehicle comprising: a stop device giving an instruction to stop the generation of electricity by the fuel cell, wherein the stop device is a stop switch; a control unit processing stopping of the generation of electricity by the fuel cell; a leg part grounding when the flight vehicle lands, to support a load of the flight vehicle; and a sensor detecting the load applied to the leg part, wherein the control unit permits the stopping of the generation of electricity based on signals from the stop device and the sensor, only if the sensor detects that the load applied to the leg part is more than a threshold value.

Here, "the control unit permits the stopping of the generation of electricity based on signals from the stop device and the sensor, only if the sensor detects that the load applied to the leg part is more than a threshold value" means at least one of: that the control unit does not process the stopping of the generation of electricity even if the stop device (a stop switch) is operated unless the conditions are satisfied; and that the stop device (a stop switch) cannot be operated unless the conditions are satisfied.

A plurality of the sensors may be disposed on the leg part, and the control unit may permit the stopping of the generation of electricity only if all the sensors detect that the respective loads applied to the leg part are more than a threshold value.

The control unit may perform the stopping of the generation of electricity after confirming that the load applied being more than a threshold value is maintained for a predetermine time after each of the sensor(s) has detected that the load applied is more than a threshold value.

### Advantageous Effects

The flight vehicle according to the present disclosure makes it possible to prevent the generation of electricity by a fuel cell from being stopped in flight even when a mistaken operation is conducted.

### BRIEF DESCRIPTION OF DRAWINGS

Fig. 1 shows an external appearance of a flight vehicle (aircraft 1);
Fig. 2 shows a control panel 3a;
Fig. 3 is a conceptual view explanatorily showing a configuration for the generation of electricity by a fuel cell 10;
Fig. 4 is a conceptual view explanatorily showing the relationship among devices driven by the fuel cell 10;
Fig. 5 explanatorily shows a configuration of the control unit 70;
Fig. 6 explanatorily shows the flow of stop control according to the first embodiment;
Fig. 7 explanatorily shows the flow of stop control according to the second embodiment;
Fig. 8 explanatorily shows the flow of stop control according to the third embodiment; and
Fig. 9 explanatorily shows the flow of stop control according to the fourth embodiment.

### DESCRIPTION OF EMBODIMENTS

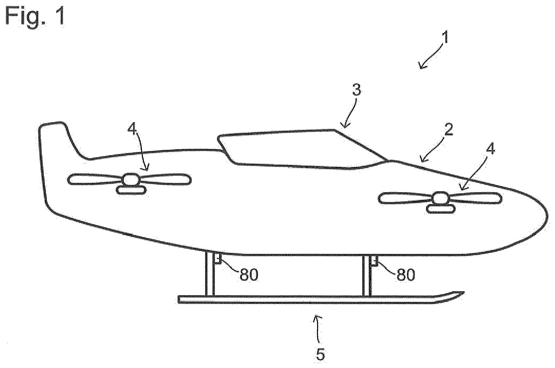

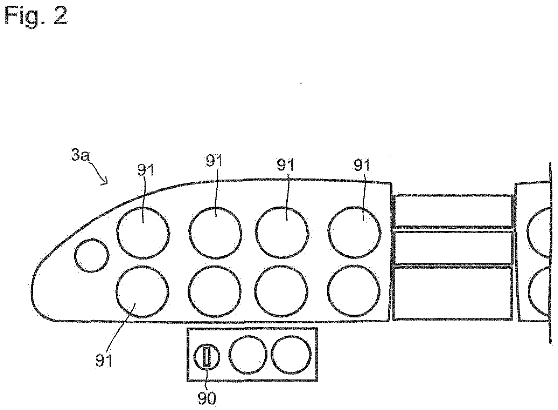

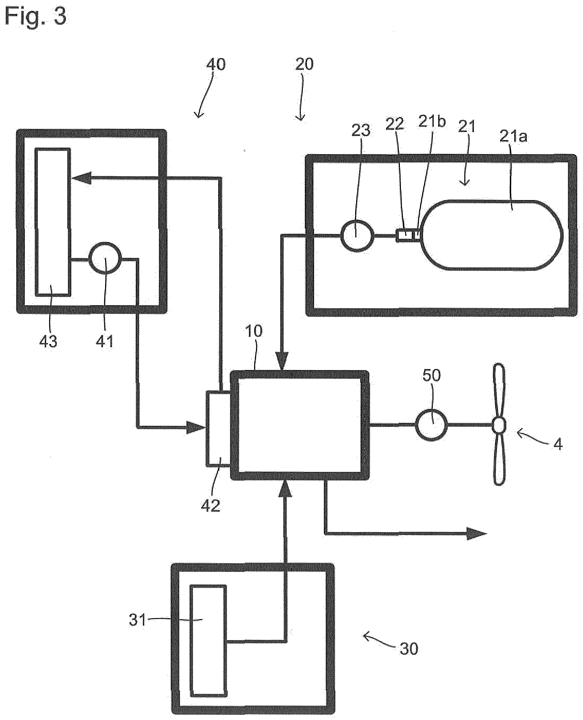

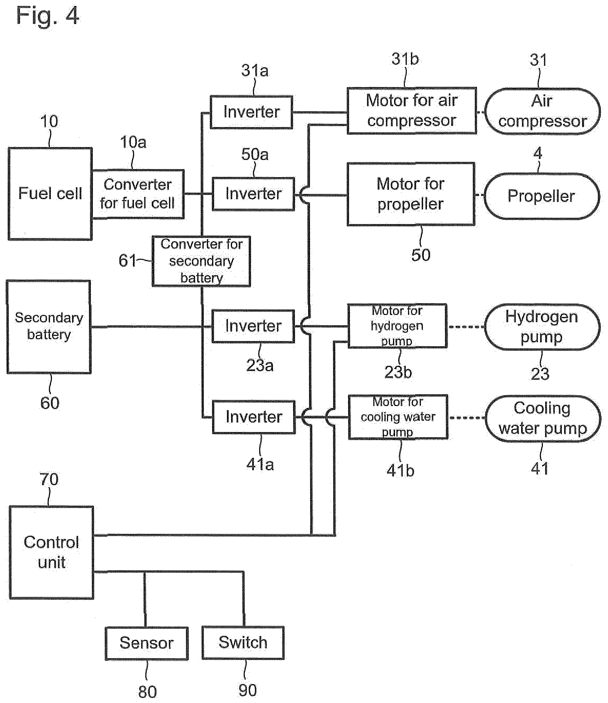

Figs. 1 to 4 explanatorily show the configuration of a flight vehicle (aircraft 1) with a fuel cell as a power source for flight which is an example according to one embodiment. Fig. 1 shows an external appearance of this flight vehicle (aircraft 1). Fig. 2 is an external view of a control panel 3a provided in a cockpit 3 of the flight vehicle (aircraft 1). Fig. 3 schematically shows the configuration for the generation of electricity by a fuel cell 10 which is included in the flight vehicle (aircraft 1). Fig. 4 schematically shows the relationship among structures relating to the operation of the fuel cell 10.

The aircraft I will be described here as one embodiment of a flight vehicle for the description. The scope of the flight vehicle according to the present disclosure may include various embodiments of the flight vehicle as long as a fuel cell is used therein as a power source for a propeller, and the external appearance thereof, the position of the propeller, the number of the propeller(s), etc. are not particularly limited either. Accordingly, the size, the capacity, etc., that is, the scale of the flight vehicle is not limited. The scope of the flight vehicle according to the present disclosure also includes a drone and the like which are unmanned flight vehicles which are wirelessly operated or into which flight routes are programmed in advance, to fly.

### 1. External Appearance

As can be seen in Fig. 1, the aircraft 1 according to the present embodiment is provided with a body 2 that is a housing for housing thereinside each component necessary for flight, and a cockpit 3 on an upper portion of the body 2 which is for a person to get into, to pilot the aircraft 1. On the aircraft 1 according to the present embodiment, propellers 4 for taking-off and propulsion of the aircraft 1 which are four in total are arranged: the four propellers 4 are respectively in the left front, right front, left back and right back of the body 2. Further, a leg part 5 that grounds when the aircraft lands, to support the body 2 is provided on a lower portion of the body 2. The number of the leg part(s) 5 may be either one or more as long as the leg part(s) 5 can support the body 2.

The control panel 3a is disposed in the cockpit 3 as shown in Fig. 2. A stop switch 90 (stop device to give an instruction to stop the generation of electricity by the fuel cell. In this embodiment, the stop switch is also a switch to start the operation of the fuel cell) is arranged on the control panel 3a. On the control panel 3a, meters 91 are arranged in addition to the stop switch 90. The meters 91 are not particularly limited, and examples thereof include a speedometer, a gyro horizon, an altimeter, a turn-and-bank indicator, a vertical speed indicator, a tachometer, and a compass.

### 2. Generation of Electricity by Fuel Cell

The flight vehicle according to the present disclosure is configured to drive the propellers by electric power generated by the fuel cell, thereby obtaining power necessary for flight. Therefore, as can be seen in Fig. 3, the fuel cell 10 is electrically connected to a motor to drive the propellers (motor for propellers 50), and the propellers 4 are driven by this motor to drive the propellers (motor for propellers 50). Hydrogen from a hydrogen supply system 20 and air from an air supply system 30 are supplied to the fuel cell 10, whereby the fuel cell 10 generates electricity. Cooling water is supplied from a circulating cooling water system 40 to the fuel cell 10, to cool the fuel cell 10. Each of the structures will be described below.

### 2.1 Fuel Cell

The fuel cell 10 is as is known. For example, the fuel cell 10 is formed by housing a fuel cell stack of plural stacked fuel cells in a case for a stack. The plural fuel cells are each formed of a membrane-electrode assembly (MEA) held between two separators. The MEA is a layered product of a solid polymer membrane, an anode catalyst layer, a cathode catalyst layer, an anode gas diffusion layer, a cathode gas diffusion layer, etc.

### 2.2 Hydrogen Supply System

The hydrogen supply system 20 is a system supplying hydrogen to the fuel cell 10 via piping. The hydrogen supply system 20 is as is known, and is provided with a hydrogen tank 21, a valve 22 and a hydrogen pump 23.

The hydrogen tank 21 is a tank in which hydrogen is stored, and is provided with a hydrogen tank body 21a in the form of a container, and a mouthpiece 21b whereby hydrogen stored in the hydrogen tank body 21a is taken out via the mouthpiece 21b.

The valve 22 is attached to the mouthpiece 21b for controlling the hydrogen so that the hydrogen enters or exits the hydrogen tank 21.

The hydrogen pump 23 is a pump by which the hydrogen taken out of the hydrogen tank 21 via the valve 22 is fed to the fuel cell 10. The specific aspect of the hydrogen pump 23 is not particularly limited. A known hydrogen pump applied to a power generation system by a fuel cell may be applied to the hydrogen pump 23.

### 2.3 Air Supply System

The air supply system 30 is a system supplying air to the fuel cell 10 via piping. The air supply system 30 is as is known, and is provided with an air compressor 31. The air compressor 31 takes in and compresses ambient air, to feed the air to the fuel cell 10. The specific aspect of the air compressor 31 is not particularly limited. A known air compressor applied to a power generation system by a fuel cell may be applied to the air compressor 31.

### 2.4 Circulating Cooling Water System

The circulating cooling water system 40 circulates cooling water via piping to supply the cooling water to the fuel cell 10 and collect the cooling water that has cooled the fuel cell 10, to emit heat to the outside air. The circulating cooling water system 40 is as is known, and is provided with a cooling water pump 41, a heat exchanger for cooling 42, and a radiator 43.

The cooling water pump 41 is a pump by which cooling water is circulated. A known one may be used.

The heat exchanger for cooling 42 is disposed on the fuel cell 10. The heat exchanger 42 absorbs the heat caused by the generation of electricity by the fuel cell 10, thereby cooling the fuel cell 10. The specific aspect of the heat exchanger for cooling 42 is not particularly limited. A known heat exchanger for cooling which is applied to a power generation system by a fuel cell may be applied to the heat exchanger 42.

The radiator 43 is a heat exchanger from which the heat absorbed from the fuel cell 10 is radiated to the outside air. According to the foregoing, the heat from the cooling water including the heat absorbed from the fuel cell 10 is emitted to the outside air, so that the cooling water can cool the fuel cell 10 again. The specific aspect of the radiator 43 is not particularly limited. A known radiator applied to a power generation system by a fuel cell may be applied to the radiator 43.

With the configuration as described above, cooling water passes through each structure via the piping, to circulate as follows. The cooling water arriving at the heat exchanger for cooling 42 by means of the cooling water pump 41 absorbs the heat from the fuel cell 10, and moves to the radiator 43. The cooling water arriving at the radiator 43 emits the heat absorbed from the fuel cell 10 to the outside air, and reaches the cooling water pump 41 again.

### 3. Driving by Generated Electricity

Fig. 4 schematically shows the relationship among the structures driven using the electric power generated by the fuel cell 10.

The propellers 4 are driven by the motor for propellers 50, using the electric power generated by the fuel cell 10 via a converter for a fuel cell 10a, and an inverter 50a. Power for flight is obtained by driving the propellers 4.

The cooling water pump 41 is driven by a motor for a cooling water pump 41b, using the electric power generated by the fuel cell 10 via the converter for a fuel cell 10a, and an inverter 41a. The cooling water pump 41 is driven, whereby cooling water circulates through the circulating cooling water system 40 as described above.

The air compressor 31 is driven by a motor for an air compressor 31b, using the electric power generated by the fuel cell 10 via the converter for a fuel cell 10a, and an inverter 31a. The air compressor 31 is driven, whereby air is supplied from the air supply system 30 to the fuel cell 10 as described above.

The hydrogen pump 23 is driven by a motor for a hydrogen pump 23b, using the electric power generated by the fuel cell 10 via the converter for a fuel cell 10a, and an inverter 23a. The hydrogen pump 23 is driven, whereby hydrogen is supplied from the hydrogen supply system 20 to the fuel cell 10 as described above.

An electric system for the driving with the generated electricity includes a secondary battery 60 provided in the flight vehicle 1. The secondary battery 60 is also electrically connected to each of the motor for an air compressor 31b, the motor for propellers 50, the motor for a cooling water pump 41b, and the motor for a hydrogen pump 23b via a secondary battery converter 61 and/or the inverters 23a, 31a, 41a and 50a, so that the foregoing structures can be driven.

Electric power is supplied by the secondary battery 60 when the aircraft 1 is started, and other than this, may be also supplied in case of emergency. The secondary battery 60 is made so as to be able to be charged with the electric power from the fuel cell 10.

### 4. Stop Control of Fuel Cell

### 4.1. Configuration for Stop Control

Fig. 4 shows the configuration concerning the stop control of the fuel cell, together with the relationship among the structures driven using the electric power generated by the fuel cell 10.

The flight vehicle 1 is provided with a control unit 70 and a sensor 80, for the stop control of the fuel cell 10.

As schematically shown in Fig. 1, for example, the sensor 80 is disposed on the leg part 5 of the aircraft 1, and is a sensor detecting a load applied to the leg part 5. That is, the sensor 80 detects the load of the body 2 etc. applied to the leg part 5 when the aircraft 1 lands. The number of the disposed sensor(s) 80 may be either one or more than two. When the number of the leg parts 5 are more than two, the sensor(s) may be disposed on each or any one of the leg parts 5.

The specific aspect of the sensor 80 is not particularly limited. Examples of the sensor 80 include a load sensor, a strain sensor, and a sensor in combination of a spring and a sensor detecting the degree of stretching or compressing of the spring (for example, in combination of a spring and an optical sensor).

As described later, the control unit 70 determines whether to stop the fuel cell 10 or not, in response to the instruction from the stop switch 90, based on information from the sensor 80, to carry out the stop control of the fuel cell 10. Therefore, as shown in Fig. 4, the control unit 70 is electrically connected to the stop switch 90, the sensor 80, the motor for an air compressor 31b, and the motor for a hydrogen pump 23b.

How to carry out the stop control specifically will be described in detail later.

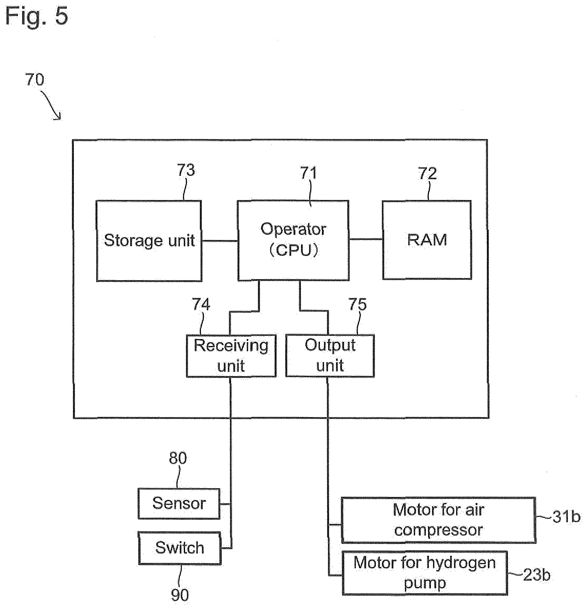

An example of the control unit 70 is a computer. Fig. 5 schematically shows the configuration of the control unit 70 according to one example. The control unit 70 includes an operator 71, RAM 72, a storage unit 73, a receiving unit 74, and an output unit 75.

The operator 71 is configured by so-called CPU (central operator), executes various programs stored in the storage unit 73 etc. that function as storage media, perform operation based on the information from the stop switch 90 and the sensor 80, and transmits instructions to the motor for an air compressor 31b and the motor for a hydrogen pump 23b.

The RAM 72 is a component functioning as a workspace for the operator, and a storage unit for temporary data. The RAM may be configured by SRAM, DRAM, flash memory, or the like, and is the same as known RAM.

The storage unit 73 is a member functioning as a storage medium in which programs and data which are the bases of various operations are stored. In the storage unit, various intermediate and final results obtained by executing programs may be stored.

In the present embodiment, the program as follows is included as one program stored in this storage unit 73: a program to perform operation based on the information from the stop switch 90 and the sensor 80, and transmit instructions to the motor for an air compressor 31b and the motor for a hydrogen pump 23b, to carry out the control of stopping the generation of electricity by the fuel cell 10, as described later.

The receiving unit 74 is a component having a function of receiving the signals from the stop switch 90 and the sensor 80.

The output unit 75 is a component having a function of suitably outputting information that is to be output to the outside among the obtained results. In the present embodiment, the motor for an air compressor 31b and the motor for a hydrogen pump 23b are electrically connected to the output unit 75.

### 4.2. Control Flow

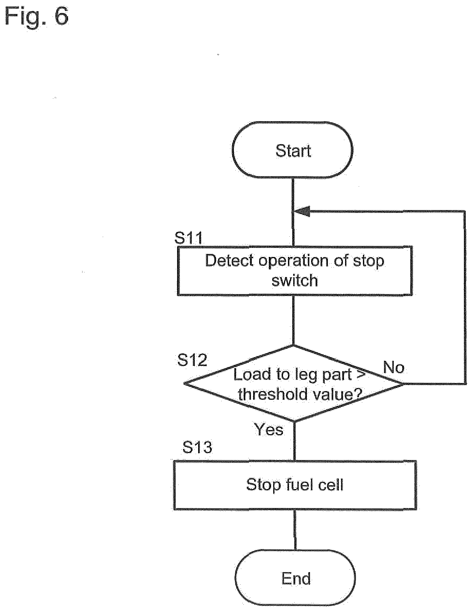

Next, the stop control of the fuel cell 10 with the control unit 70 will be described. Figs. 6 to 9 show the flows of four embodiments.

### 4.2a. First Embodiment

As can be seen from Fig. 6, operation with the control unit 70 according to the first embodiment includes Steps S11 to S13. Each of the steps will be described below.

In Step S11, it is detected that the stop switch 90 is operated.

In Step S12, it is determined whether the load applied to the leg part 5 is more than a threshold value, based on a signal from the sensor 80. Here, as the threshold value, the amount of the load detected by the sensor 80 in the state where the aircraft 1 lands is obtained in advance, and is stored in the storage unit 73 as a database.

If the result is No in Step S12, it is determined that the aircraft 1 does not land, and the generation of electricity by the fuel cell 10 is maintained without stopping thereof. The operation of the stop switch 90 is canceled.

If the result is Yes in Step S12, it is determined that the aircraft 1 lands, and the process moves to Step S13.

In Step S13, stopping of the fuel cell 10 is carried out. The stopping of the fuel cell 10 is performed by: transmitting a signal from the control unit 70 to the motor for an air compressor 31b and/or the motor for a hydrogen pump 23b to stop the motor(s) 31b and/or 23b. Preferably, the motor for an air compressor 31b and/or the motor for a hydrogen pump 23b is/are actually stopped after water is drained, gas is set (air is sealed in; and the pressure of hydrogen is set), and a main valve is closed. According to the above, prevention of the fuel cell from deteriorating, and a smooth restart (antifreezing) of the fuel cell are achieved.

According to such stop control of the fuel cell 10 with the control unit 70, the fuel cell 10 is stopped after it is determined that the aircraft 1 lands based on the determination of the load applied to the leg part 5. Thus, the generation of electricity by the fuel cell 10 is not stopped even when the stop switch 90 is mistakenly operated in flight.

### 4.2b. Second Embodiment

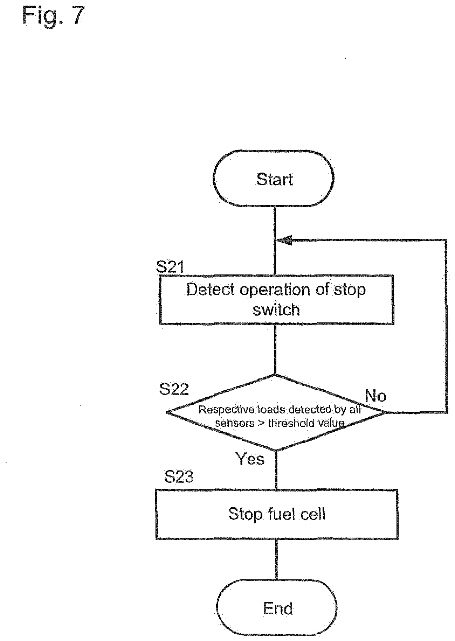

As can be seen from Fig. 7, operation with the control unit 70 according to the second embodiment includes Steps S21 to S23. Each of the steps will be described below.

In Step S21, it is detected that the stop switch 90 is operated.

In Step S22, it is determined whether respective loads detected by all the sensors are more than a threshold value, based on signals from a plurality of the disposed sensors 80. Here, as the threshold value, the amounts of the loads detected by the sensors 80 in the state where the aircraft 1 lands are each obtained in advance, and are stored in the storage unit 73 as a database.

If the result is No in Step S22, it is determined that the aircraft 1 does not land, and the generation of electricity by the fuel cell 10 is maintained without stopping thereof. The operation of the stop switch is canceled.

If the result is Yes in Step S22, it is determined that the aircraft 1 lands, and the process moves to Step S23.

In Step S23, stopping of the fuel cell 10 is carried out. The stopping of the fuel cell 10 is performed by: transmitting a signal from the control unit 70 to the motor for an air compressor 31b and/or the motor for a hydrogen pump 23b to stop the motor(s) 31b and/or 23b. Preferably, the motor for an air compressor 31b and/or the motor for a hydrogen pump 23b is/are actually stopped after water is drained, gas is set (air is sealed in; and the pressure of hydrogen is set), and a main valve is closed. According to the above, prevention of the fuel cell from deteriorating, and a smooth restart (antifreezing) of the fuel cell are achieved.

According to such stop control of the fuel cell 10 with the control unit 70, the fuel cell 10 is stopped after it is determined that the aircraft 1 lands based on the determination of the load applied to the leg part 5. Thus, the generation of electricity by the fuel cell 10 is not stopped even when the stop switch 90 is mistakenly operated in flight.

In this embodiment, whether the aircraft 1 lands or not can be more reliably determined because all the respective loads detected by a plurality of the disposed sensors 80 are required to each exceed the threshold value.

### 4.2c. Third Embodiment

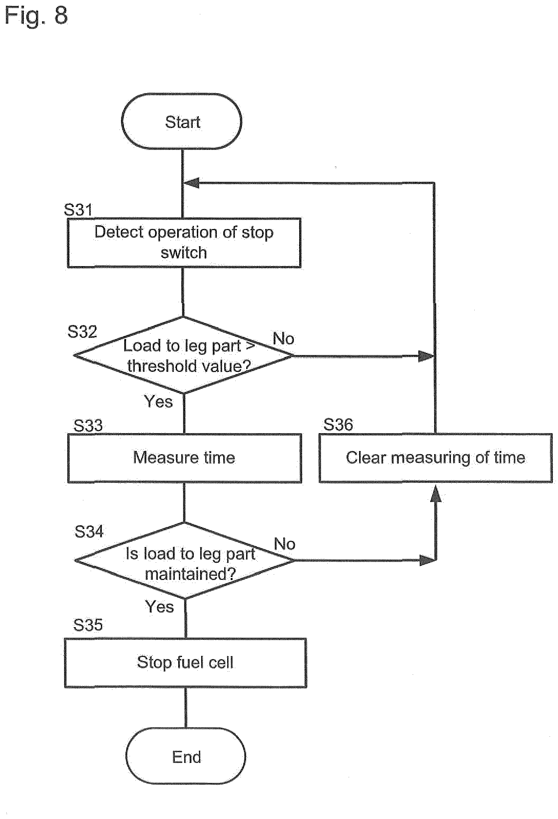

As can be seen from Fig. 8, operation with the control unit 70 according to the third embodiment includes Steps S31 to S36. Each of the steps will be described below.

In Step S31, it is detected that the stop switch 90 is operated.

In Step S32, it is determined whether the load is more than a threshold value, based on a signal from the sensor 80. Here, as the threshold value, the amount of the load detected by the sensor 80 in the state where the aircraft 1 lands is obtained in advance, and is stored in the storage unit 73 as a database.

If the result is No in Step S32, it is determined that the aircraft 1 does not land, and the generation of electricity by the fuel cell 10 is maintained without stopping thereof. The operation of the stop switch is canceled.

If the result is Yes in Step S32, the process moves to Step S33.

In Step S33, predetermined time is measured. After this time has elapsed, the process moves to Step S34.

In Step S34, it is determined whether the load to the leg part, which is obtained in Step S32, is still maintained even after the time measured in Step S33 has elapsed.

If the result is No in Step S34, it is determined that the load to the leg part 5 is temporary and the aircraft 1 does not land, and the process moves to Step S36. In Step S36, the measuring of the time in Step S33 is cleared, and the generation of electricity by the fuel cell 10 is maintained without stopping thereof. The operation of the stop switch is canceled.

If the result is Yes in Step S34, the process moves to Step S35.

In Step S35, stopping of the fuel cell 10 is carried out. The stopping of the fuel cell 10 is performed by: transmitting a signal from the control unit 70 to the motor for an air compressor 31b and/or the motor for a hydrogen pump 23b to stop the motor(s) 31b and/or 23b. Preferably, the motor for an air compressor 31b and/or the motor for a hydrogen pump 23b is/are actually stopped after water is drained, gas is set (air is sealed in; and the pressure of hydrogen is set), and a main valve is closed. According to the above, prevention of the fuel cell from deteriorating, and a smooth restart (antifreezing) of the fuel cell are achieved.

According to such stop control of the fuel cell 10 with the control unit 70, the fuel cell is stopped after it is determined that the aircraft 1 lands based on the determination of the load applied to the leg part 5. Thus, the generation of electricity by the fuel cell is not stopped even when the stop switch 90 is mistakenly operated in flight.

In this embodiment, the stopping of the fuel cell is not performed unless the load applied to the leg part is maintained even after some period of time has elapsed, even once the load exceeds the threshold value. Thus, it can be prevented to stop the fuel cell when a temporary load to the leg part is detected for some reason although the aircraft does not land, and it can be more reliably prevented to stop the generation of electricity by the fuel cell by mistake.

### 4.2d. Fourth Embodiment

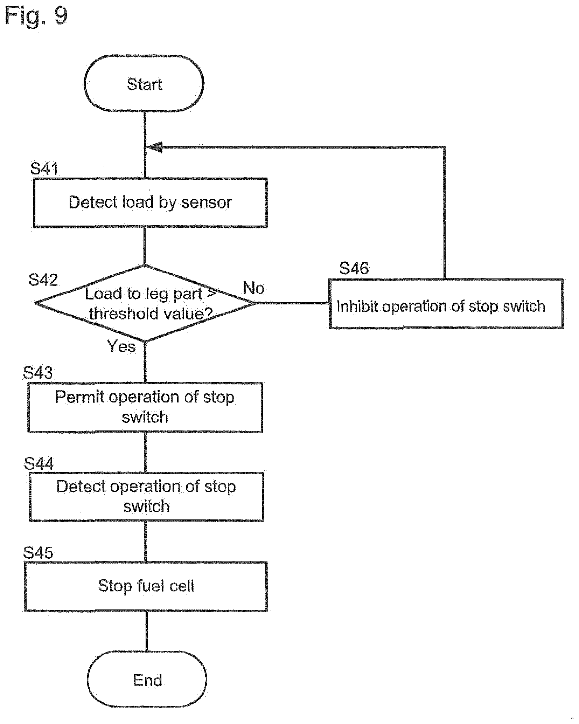

As can be seen from Fig. 9, operation with the control unit 70 according to the fourth embodiment includes Steps S41 to S46. Each of the steps will be described below.

In Step S41, the load is detected by the sensor 80, and a signal is transmitted to the control unit 70. This transmission is performed automatically at predetermined time intervals.

In Step S42, it is determined whether the load is more than a threshold value, based on the signal from the sensor 80 which is obtained in Step S41. Here, as the threshold value, the amount of the load detected by the sensor 80 in the state where the aircraft 1 lands is obtained in advance, and is stored in the storage unit 73 as a database.

If the result is No in Step S42, it is determined that the aircraft 1 does not land, and the process moves to Step S46. In Step S46, the operation of the stop switch 90 is inhibited.

If the result is Yes in Step S42, the process moves to Step S43. In Step S43, the operation of the stop switch 90 is permitted, and the process moves to Step S44.

In the Step S44, a pilot operates the stop switch 90, and it is detected that the stop switch 90 is operated. Then, the process moves to Step S45.

In Step S45, stopping of the fuel cell 10 is carried out. The stopping of the fuel cell 10 is performed by: transmitting a signal from the control unit 70 to the motor for an air compressor 31b and/or the motor for a hydrogen pump 23b to stop the motor(s) 31b and/or 23b. Preferably, the motor for an air compressor 31b and/or the motor for a hydrogen pump 23b is/are actually stopped after water is drained, gas is set (air is sealed in; and the pressure of hydrogen is set), and a main valve is closed. According to the above, prevention of the fuel cell from deteriorating, and a smooth restart (antifreezing) of the fuel cell are achieved.

According to such stop control of the fuel cell 10 with the control unit 70, the operation of the stop switch 90 is permitted after it is determined that the aircraft 1 lands based on the determination of the load applied to the leg part 5. Thus, no mistaken operation is conducted, and the generation of electricity by the fuel cell is not stopped either because the operation of the stop switch 90 is inhibited in flight. That is, in this embodiment, the operation of the stop switch 90 itself is inhibited unless it is determined that the aircraft 1 lands.

### Reference Signs List

1 aircraft (flight vehicle)
2 body
3 cockpit
4 propeller
5 leg part
10 fuel cell
20 hydrogen supply system
21 hydrogen tank
22 valve
23 hydrogen pump
30 air supply system
31 air compressor
40 circulating cooling water system
41 cooling water pump
42 heat exchanger for cooling
43 radiator
50 motor for a propeller
70 control unit
80 sensor
90 stop switch

## Claims

1. A flight vehicle (1) including a fuel cell (10) and a propeller (4), the propeller (4) to be driven by electric power generated by the fuel cell (10), the flight vehicle (1) comprising:
a stop device giving an instruction to stop the generation of electricity by the fuel cell (10), wherein the stop device is a stop switch (90);
a control unit (70) processing stopping of the generation of electricity by the fuel cell (10);
a leg part (5) grounding when the flight vehicle (1) lands, to support a load of the flight vehicle (1); and
a sensor (80) detecting the load applied to the leg part (5), wherein the control unit (70) permits the stopping of the generation of electricity based on signals from the stop device and the sensor, only if the sensor (80) detects that the load applied to the leg part (5) is more than a threshold value.

2. The flight vehicle (1) according to claim 1, wherein
a plurality of the sensors (80) are disposed on the leg part (5), and
the control unit (70) permits the stopping of the generation of electricity only if all the sensors (80) detect that the respective loads applied to the leg part (5) are more than a threshold value.

3. The flight vehicle (1) according to claim 1 or 2, wherein
the control unit (70) performs the stopping of the generation of electricity after confirming that the load applied being more than a threshold value is maintained for a predetermined time after each of the sensor(s) (80) has detected that the load applied is more than a threshold value.

## Patentansprüche

1. Luftfahrzeug (1), das eine Brennstoffzelle (10) und einen Propeller (4) enthält, wobei der Propeller (4) durch die von der Brennstoffzelle (10) erzeugte elektrische Energie angetrieben werden soll, wobei das Luftfahrzeug (1) umfasst:
eine Stoppvorrichtung, die einen Befehl zum Stoppen der Stromerzeugung durch die Brennstoffzelle (10) gibt, wobei die Stoppvorrichtung ein Stoppschalter (90) ist;
eine Steuereinheit (70), die das Anhalten der Erzeugung von Elektrizität durch die Brennstoffzelle (10) verarbeitet;
ein Beinteil (5), das bei der Landung des Luftfahrzeugs (1) am Boden liegt, um eine Last des Luftfahrzeugs (1) zu tragen; und
einen Sensor (80), der die auf das Beinteil (5) ausgeübte Last erfasst, wobei
die Steuereinheit (70) das Anhalten der Stromerzeugung basierend auf Signalen von der Stoppvorrichtung und dem Sensor nur dann zulässt, wenn der Sensor (80) erfasst, dass die auf das Beinteil (5) ausgeübte Last größer als ein Schwellenwert ist.

2. Luftfahrzeug (1) nach Anspruch 1, wobei
eine Vielzahl der Sensoren (80) an dem Beinteil (5) angeordnet ist, und
die Steuereinheit (70) die Unterbrechung der Stromerzeugung nur dann zulässt, wenn alle Sensoren (80) erfassen, dass die jeweiligen auf das Beinteil (5) ausgeübten Lasten größer als ein Schwellenwert sind.

3. Luftfahrzeug (1) nach Anspruch 1 oder 2, wobei
die Steuereinheit (70) die Unterbrechung der Stromerzeugung durchführt, nachdem sie bestätigt hat, dass die ausgeübte Last, die größer als ein Schwellenwert ist, für eine vorbestimmte Zeit aufrechterhalten wird, nachdem jeder der einen oder mehreren Sensoren (80) erfasst hat, dass die ausgeübte Last größer als ein Schwellenwert ist.

## Revendications

1. Véhicule volant (1) incluant une pile à combustible (10) et une hélice (4), l'hélice (4) étant destinée à être entraînée par énergie électrique générée par la pile à combustible (10), le véhicule volant (1) comprenant :
un dispositif d' arrêt donnant une instruction d' arrêter la génération d'électricité par la pile à combustible (10), dans lequel le dispositif d'arrêt est un interrupteur d'arrêt (90) ;
une unité de commande (70) traitant l'arrêt de la génération d'électricité par la pile à combustible (10) ;
une partie patin (5) entrant en contact avec le sol lorsque le véhicule volant (1) atterrit, pour supporter une charge du véhicule volant (1) ; et
un capteur (80) détectant la charge appliquée sur la partie patin (5), dans lequel
l'unité de commande (70) permet l'arrêt de la génération d'électricité sur la base de signaux provenant du dispositif d'arrêt et du capteur, seulement si le capteur (80) détecte que la charge appliquée sur la partie patin (5) est supérieure à une valeur seuil.

2. Véhicule volant (1) selon la revendication 1, dans lequel
une pluralité des capteurs (80) sont disposés sur la partie patin (5), et
l'unité de commande (70) permet l'arrêt de la génération d'électricité seulement si tous les capteurs (80) détectent que les charges respectives appliquées sur la partie patin (5) sont supérieures à une valeur seuil.

3. Véhicule volant (1) selon la revendication 1 ou 2, dans lequel
l'unité de commande (70) réalise l'arrêt de la génération d'électricité après avoir confirmé que la charge appliquée, qui est supérieure à une valeur seuil, est maintenue pendant une période prédéterminée après que chacun du (des) capteur(s) (80) a détecté que la charge appliquée est supérieure à une valeur seuil.
